# EUROPEAN PATENT APPLICATION

(11) **EP 4 707 865 A1**
(43) Date of publication of application: **11.03.2026**
(21) Application number: 25198955.4
(22) Date of filing: 29.08.2025
(51) Int. Cl.: G01S 17/87, G01S 17/66, G01S 17/89, G01S 17/931, G01S 7/481

(54) **TRACKING OF OBJECTS USING MULTIPLE SENSORS**

(30) Priority: 03.09.2024 SE 2450879
(71) Applicant: Scania CV AB, 151 87 Södertälje (SE)
(72) Inventor: TIMUS, Bogdan, 163 42 Spånga (SE); LILJA, Joakim, 128 33 Skarpnäck, (SE); SHARIF MANSOURI, Sina, 144 37 Rönninge, (SE); SJÖNÄS, Jonatan, 179 75 Skå (SE); ERLANDSSON, Stefan, 169 40 Solna (SE)
(74) Representative: Scania CV AB

(57) **Abstract**

A method performed by a control arrangement (700) configured to track an object in a scene (110) observed by a plurality of perception sensors comprised in a vehicle, the method comprising: obtaining first sensor data from a first perception sensor (S1), the first sensor data being indicative of the tracked object, the first sensor data comprising a first cluster (120) of sensor data being detected at a first point in time (T_{A1}) and comprising a second cluster (140) of sensor data being detected at a subsequent second point in time (T_{A2}), obtaining second sensor data from a second perception sensor (S2) indicative of a candidate object, the second sensor data comprising a third cluster (130) of sensor data being detected at a third point in time (T_{B}), the third point in time (T_{B}) being between the first point in time (T_{A1}) and second point in time (T_{A2}), determining a trace using the first cluster (120) and the second cluster (140) of the first sensor data, calculating a distance measure between the third cluster (130) of sensor data and the determined trace, determining that the third cluster (130) of sensor data is indicative of the tracked object if the calculated distance measure is below a distance threshold, and tracking the object using the first cluster (120), the second cluster (140) and the third cluster (130) if it is determined that the third cluster (130) of sensor data is indicative of the tracked object, or tracking the object using the first cluster (120) and the second cluster (140) only if it is determined that the third cluster (130) of sensor data is not indicative of the tracked object.

## Description

### TECHNICAL FIELD

The present invention relates to detection of objects. In particular, detection of objects in the environment of a vehicle.

### BACKGROUND

With the increasing trend of fully autonomous and semi-autonomous vehicles, the ability to detect and track objects in the environment of the vehicle is crucial for safe driving of the vehicle.

Some conventional solutions rely on point cloud-based perception sensors, such as Radio, Detection and Ranging, RADAR, or Light Detection and Ranging, LIDAR. Most modern LiDAR and RADAR sensors deliver 3D point clouds. Other conventional solutions are generating 3D point clouds from camera images and then apply similar processing methods to those applied to point clouds from LiDARs and RADARs.

Using point cloud-based perception sensors one obtains a 3D representation of the full environment close to the vehicle. In other words, a point cloud surrounding the vehicle.

For some vehicles, such as heavy trucks, an onboard autonomy platform will typically comprise several perception sensors, mounted on different locations on the vehicle. This results in the sensors having at least partially different fields of view.

Detections from all perception sensors of a vehicle may be aggregated and then this aggregated point cloud may be used to detect and track objects in the environment of the vehicle.

Challenges when creating such aggregated point clouds for object detection is that all points representing a tracked object should ideally be considered. Otherwise, failure to perform accurate aggregation may result in duplicate detection or ghosts of the same tracked object, difficulties in understanding the shape and size of the object, difficulties in tracking an object over time, not being able to detect and accurately track objects, missing relevant objects when planning how the vehicle should drive, and potentially increasing the risk of a vehicle becoming involved in accidents.

Thus, there is a need for improving the performance of perception algorithms tracking objects.

### OBJECTS OF THE INVENTION

An objective of embodiments of the present invention is to provide a solution which mitigates or solves the drawbacks described above.

### SUMMARY OF THE INVENTION

The above and further objectives are achieved by the subject matter described herein. Further advantageous implementation forms of the invention are described herein. The invention is set out in the appended claims.

According to a first aspect of the invention the object of the invention is achieved by a method performed by a control arrangement configured to track an object in a scene observed by a plurality of perception sensors comprised in a vehicle, the method comprising obtaining first sensor data from a first perception sensor, the first sensor data being indicative of the tracked object, the first sensor data comprising a first cluster of sensor data being detected at a first point in time and comprising a second cluster of sensor data being detected at a subsequent second point in time, obtaining second sensor data from a second perception sensor indicative of a candidate object, the second sensor data comprising a third cluster of sensor data being detected at a third point in time, the third point in time being between the first point in time and second point in time, determining a trace using the first cluster and the second cluster of the first sensor data, calculating a distance measure between the third cluster of sensor data and the determined trace, determining that the third cluster of sensor data is indicative of the tracked object if the calculated distance measure is below a distance threshold, and tracking the object using the first cluster, the second cluster and the third cluster if it is determined that the third cluster of sensor data is indicative of the tracked object, or tracking the object using the first cluster and the second cluster only if it is determined that the third cluster of sensor data is not indicative of the tracked object.

In one embodiment according to the first aspect, the first sensor data comprises points with associated positions, wherein determining the trace comprises determining a bounding shape of points of the first cluster and points of the second cluster, the bounding shape enclosing all points of the first sensor data.

In one embodiment according to the first aspect, the distance measure is calculated as a fraction between points of the third cluster enclosed by the bounding shape of the trace and points of the third cluster not enclosed by the bounding shape of the trace.

In one embodiment according to the first aspect, the distance measure is calculated as a fraction of a bounding shape of the third cluster that is enclosed by the bounding shape if the trace.

In one embodiment according to the first aspect, the method further comprising calculating a statistical distribution of points of the first cluster and the second cluster, wherein the distance measure is calculated as a sum of Mahalanobis distances calculated from all respective positions of points of the third cluster to the statistical distribution.

In one embodiment according to the first aspect, the points of the first and the second sensor data comprises three-dimensional positions, wherein the bounding shapes are three-dimensional volumes, wherein the trace is determined as a three-dimensional volume.

In one embodiment according to the first aspect, the points of the first and second sensor data comprises two-dimensional positions, wherein the bounding shapes are two-dimensional polygons, wherein the trace is determined as a two-dimensional polygon enclosing all points of the first cluster and points of the second cluster on a two-dimensional plane.

In one embodiment according to the first aspect, the points of the first and second sensor data comprises two-dimensional positions, wherein the bounding shape of the trace is determined as a line between a bounding shape of the first cluster and a bounding shape of the second cluster on a two-dimensional plane.

In one embodiment according to the first aspect, the distance measure is calculated as the sum of Euclidean distances along a respective normal of the line to each respective point of the third cluster.

In one embodiment according to the first aspect, tracking the object comprises determining plurality of subsequent poses of the object. Each pose of the plurality of subsequent poses comprises a selection of information selected from heading of the tracked object, velocity of the tracked object acceleration of the tracked object, altitude of the tracked object, orientation of a respective bounding shape.

Advantages of the first aspect include better initial estimation of geometrical size and dynamics of objects, most importantly velocity. Requirements for computational resources or requirements is reduced. Information loss is reduced to a minimum. A further advantage of the first aspect includes reduced implementation complexity.

According to a second aspect of the invention the object of the invention is achieved by a control arrangement configured to configured to track an object in a scene observed by a plurality of perception sensors comprised in a vehicle, the control arrangement being operable to obtaining first sensor data from a first perception sensor, the first sensor data being indicative of the tracked object, the first sensor data comprising a first cluster of sensor data being detected at a first point in time and comprising a second cluster of sensor data being detected at a subsequent second point in time, obtaining second sensor data from a second perception sensor indicative of a candidate object, the second sensor data comprising a third cluster of sensor data being detected at a third point in time, the third point in time being between the first point in time and second point in time, determining a trace using the first cluster and the second cluster of the first sensor data, calculating a distance measure between the third cluster of sensor data and the determined trace determining that the third cluster of sensor data is indicative of the tracked object if the calculated distance measure is below a distance threshold, and tracking the object using the first cluster, the second cluster and the third cluster if it is determined that the third cluster of sensor data is indicative of the tracked object, or tracking the object using the first cluster and the second cluster only if it is determined that the third cluster of sensor data is not indicative of the tracked object.

In one embodiment according to the second aspect, the first sensor data comprises points with associated positions, wherein the control arrangement is further operable to determining the trace by determining a bounding shape of points of the first cluster and points of the second cluster, the bounding shape enclosing all points of the first sensor data.

In one embodiment according to the second aspect, the control arrangement is further operable to calculate the distance measure as a fraction between points of the third cluster enclosed by the bounding shape of the trace and points of the third cluster not enclosed by the bounding shape of the trace.

In one embodiment according to the second aspect, the control arrangement is further operable to calculate the distance measure as a fraction of a bounding shape of the third cluster that is enclosed by the bounding shape of the trace.

In one embodiment according to the second aspect, the control arrangement is operable to further calculating a statistical distribution of points of the first cluster and the second cluster, wherein the distance measure is calculated as a sum of Mahalanobis distances calculated from all respective positions of points of the third cluster to the statistical distribution.

In one embodiment according to the second aspect, the points of the first and the second sensor data comprises three-dimensional positions, wherein the bounding shapes are three-dimensional volumes, wherein the trace is determined as a three-dimensional volume.

In one embodiment according to the second aspect, the points of the first and second sensor data comprises two-dimensional positions, wherein the bounding shapes are two-dimensional polygons, wherein the trace is determined as a two-dimensional polygon enclosing all two-dimensional positions of the first cluster and the second cluster on a two-dimensional plane.

In one embodiment according to the second aspect, the points of the first and second sensor data comprises two-dimensional positions, wherein the control arrangement is operable to determine the bounding shape of the trace as a line between a bounding shape of the first cluster and a bounding shape of the second cluster on a two-dimensional plane.

In one embodiment according to the second aspect, the distance measure is calculated as the sum of Euclidean distances along a respective normal of the line to each respective point of the third cluster.

In one embodiment according to the second aspect, the control arrangement is operable to track the object by determining plurality of subsequent poses of the object.

In one embodiment according to the second aspect, each pose of the plurality of subsequent poses comprises a selection of information selected from heading of the tracked object, velocity of the tracked object acceleration of the tracked object, altitude of the tracked object, orientation of a respective bounding shape.

According to a second aspect of the invention the object of the invention is achieved by a vehicle comprising the control arrangement according to the second aspect, and a plurality of perception sensors communicatively coupled to the control arrangement.

Reference will be made to the appended sheets of drawings that will first be described briefly.

### BRIEF DESCRIPTION OF THE DRAWINGS

**Fig. 1** depicts an object observed by two different perception sensors.
**Fig. 2** illustrates a time interval according to one or more embodiments of the present disclosure.
**Fig. 3** illustrates an example of determining a trace according to one or more embodiments of the present disclosure.
**Fig. 4** illustrates a further example of determining a trace according to one or more embodiments of the present disclosure.
**Fig. 5** illustrates a further example of determining a trace according to one or more embodiments of the present disclosure.
**Fig. 6** illustrates tracking of an object according to one or more embodiments of the present disclosure.
**Fig. 7** illustrates a flowchart of a method according to one or more embodiments of the present disclosure.
**Fig. 8** shows a control arrangement according to one or more embodiments of the present disclosure.
**Fig. 9** illustrates clusters of points according to one or more embodiments of the present disclosure.
**Fig. 10** illustrates a trace according to one or more embodiments of the present disclosure.

A more complete understanding of embodiments of the invention will be afforded to those skilled in the art, as well as a realization of additional advantages thereof, by a consideration of the following detailed description of one or more embodiments. It should be appreciated that like reference numerals are used to identify like elements illustrated in one or more of the figures.

### DETAILED DESCRIPTION

As described in the background section, the present disclosure relates to object detection and tracking in the environment of vehicles.

Vehicles provided with multiple perception sensors typically first processes sensor data individually and then aggregate the sensor data captured during a defined time interval.

Vehicles, in particular autonomous vehicles, are typically equipped with different perception sensors, e.g., lidar, camera, and radar sensors.

Active sensors such as lidar or radars send out a pulse of energy and detect the changes in the return signal. To avoid interferences, it is desirable that these sensors do not scan the same area at same time.

Sensor data may typically be arranged in point clouds, and may originate from any sensor.

The present disclosure addresses the problem which occurs when the data from each sensor is first treated independent on the other sensors to extract per-sensor-features, and then the per-sensor-features are merged or aggregated.

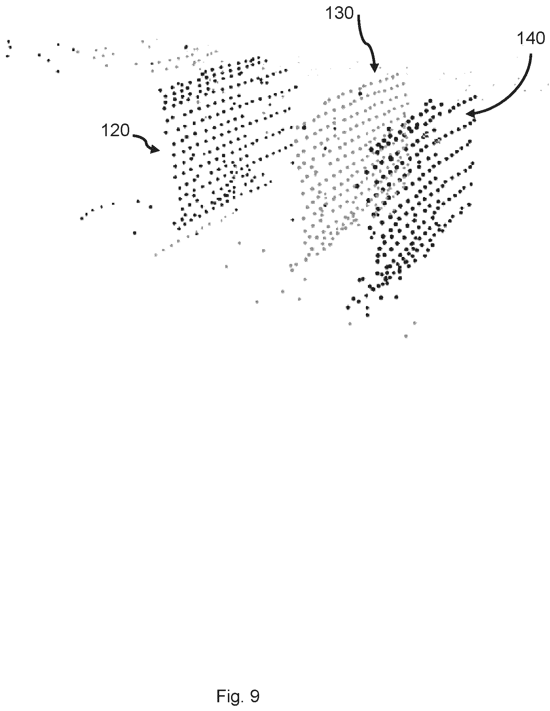

In the present disclosure, points associated with an object are firstly clustered. The clusters are generated independently for each perception sensor and for a particular point in time or time window. The clusters may be generated using any suitable algorithm for generating clusters from sensor data, e.g., point clouds from a LIDAR sensor. The clusters may be generated as a pre-processing step of the present method. This is further described in relation to Fig.9.

In a subsequent step, the clusters are aggregated using a novel approach disclosed herein. The disclosure shows that if the time between scans of perception sensors is sufficiently short, the tracked object, e.g., a vehicle, has moved such a small distance that it is nearly physically impossible for another candidate object to exist in between the two consecutive clusters of a first perception sensor. Therefore, if the cluster from the second perception sensor is located inside the space or trace occupied by the clusters generated from the first perception sensor, then the probability is high that the candidate object detected by the second perception sensor belongs to the same object detected by the first perception sensor.

It is understood that the present disclosure is not limited to using two sensors, and that any number of perception sensors greater than two may be used without departing from the present disclosure.

The space, or bounding shape, could either be a 2-dimensional area, or a 3-dimensional volume that the object has covered between the two time instances. In other words, the bounding shape of the trace encloses all points of clusters generated from the first perception sensor.

Different embodiments of the disclosure refer to computing a distance metric (e.g. probability) for how likely a cluster generated by the second sensor to belong to the same object as the two clusters generated by the first perception sensor. The distance metric may e.g., be based on the timestamps of the clusters and the relative position between points in the clusters.

In other words, the present disclosure addresses the problem with existing methods, where each sensors data is processed in parallel, and it is assumed that accurate enough point cloud clusters can be extracted from each sensor scan at each time and that these clusters can be associated to each other between two consecutive scans.

**Fig. 1** depicts an object, such as a moving vehicle, at multiple time instances TA₁, TA₂ and TB, observed by two different perception sensors (e.g., two lidar sensors) The object is located in a real-world scene 110, typically in the environment of a second vehicle carrying the perception sensors.

Two clusters of points, 120, 140 are observed at two instances TA₁, TA₂ of time by a first perception sensor, both clusters being indicative of a tracked object. In other words, the same tracked object.

A further cluster of points, 130 is observed a third time instance TB by a second perception sensor, the cluster being indicative of a candidate object, possibly identical to the tracked object detected by the first perception sensor.

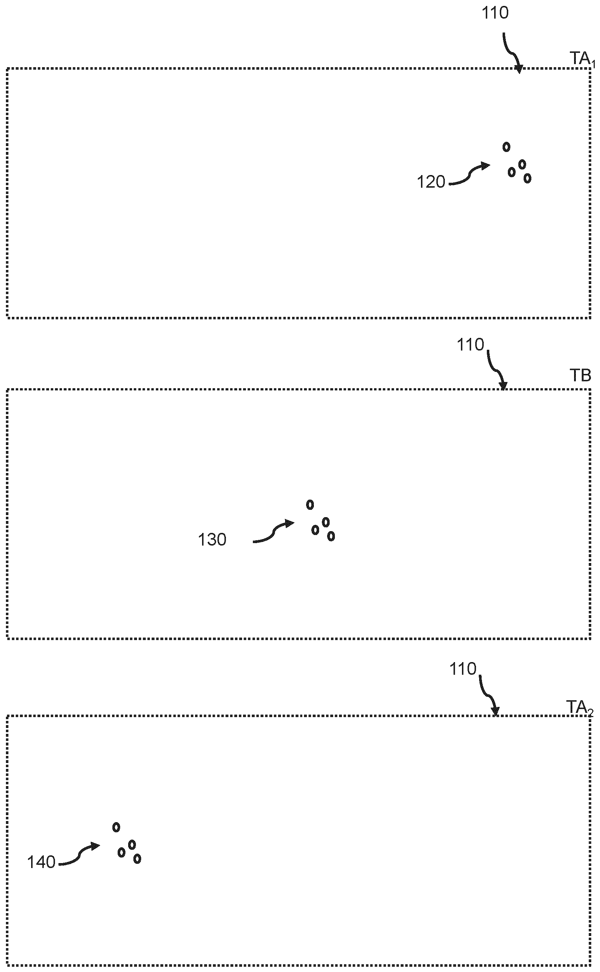

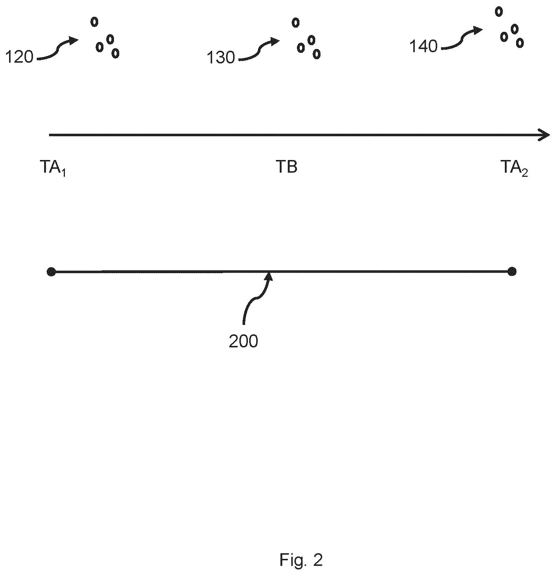

**Fig. 2** illustrates a time interval 200 according to one or more embodiments of the present disclosure. The time interval 200 typically has a duration of a time period that allows all perception sensors of a vehicle to complete a 360-degree scan.

Registration of perception sensor data starts at a first point in time TA₁ and continues to a second point in time TA₂. The first point in time TA₁ and the second point in time TA₂ forms the defined time interval 200.

Registration of perception sensor data from the second sensor is performed at a third point in time TB.

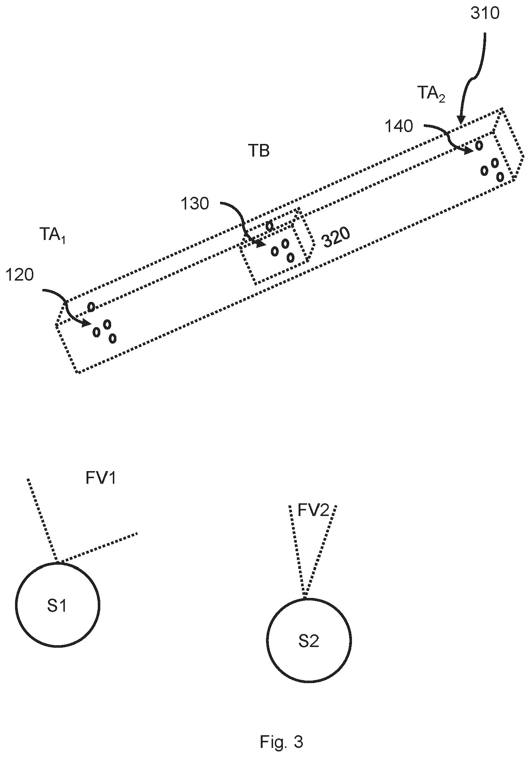

**Fig. 3** illustrates an example of determining a trace according to one or more embodiments of the present disclosure.

In Fig. 3, a non-limiting example where two perception sensors are used is illustrated. A first perception sensor S1 has a first field of view FV1 of the scene 110. A second perception sensor S2 has a second field of view FV2 of the scene 110.

In other words, the two perception sensors are monitoring the scene 110 from different perspectives and/or at slightly different time instances.

Sensor data of the first sensor S1 is typically captured or obtained starting at a first point in time TA₁ and ending at a second point in time TA₂. The first sensor data is indicative of the tracked object.

The captured perception sensor data typically represents a point cloud. Clusters of points 120, 140 are generated, at or adjacent to the points in time TA₁ and TA₂, and are indicative of the tracked object. The first sensor's data comprises a first cluster 120 and a second cluster 140 of sensor data, or points, associated with the tracked object.

The sensor data of the second perception sensor S2 is captured at or adjacent to a third point in time TB.

The captured perception sensor data typically represents a point cloud. A cluster of points 130 is generated and are indicative of a candidate object, potentially identical to the tracked object.

The third point in time T_{B} being between the first point in time TA₁ and the second point in time T_{A2}.

A trace is then determined using the first cluster 120 and the second cluster 140 of the first sensor data.

In one embodiment, the first sensor data comprises points with associated positions. The step of determining the trace comprises determining a bounding shape 310 of points of the first cluster 120 and points of the second cluster 140, the bounding shape 310 enclosing all points of the first sensor data.

In one embodiment, the points of the first and the second sensor data comprises three-dimensional positions. Optionally, the bounding shapes 310, 320 are three-dimensional volumes, wherein the trace is determined as a three-dimensional volume.

In the example shown in Fig. 3, it can be seen that the bounding shape of the third cluster 130 and the trace are cuboids.

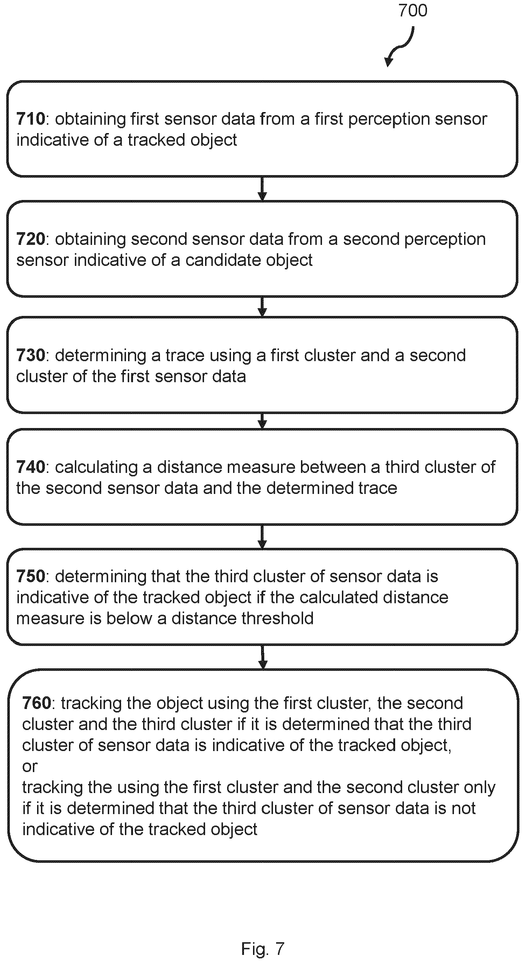

A distance measure is then calculated between the third cluster 130 of sensor data and the determined trace. Determining distance measures are further detailed in relation to Fig. 7.

Further, it is determined that the third cluster 130 of sensor data or candidate object is indicative of the tracked object if the calculated distance measure is below a distance threshold. In other words, to determine that all clusters 120, 130, 140 relate to the same object and/or that the tracked object and candidate object are the same.

Tracking of the object can then be performed using the first cluster 120, the second cluster 140 and the third cluster 130 if it is determined that the third cluster 130 of sensor data is indicative of the tracked object.

Alternatively, tracking of the object can be performed using the first cluster 120 and the second cluster 140 only if it is determined that the third cluster 130 of sensor data is not indicative of the tracked object. In other words, sensor data relating to the third cluster 130 is ignored or discarded for the purpose of tracking the object.

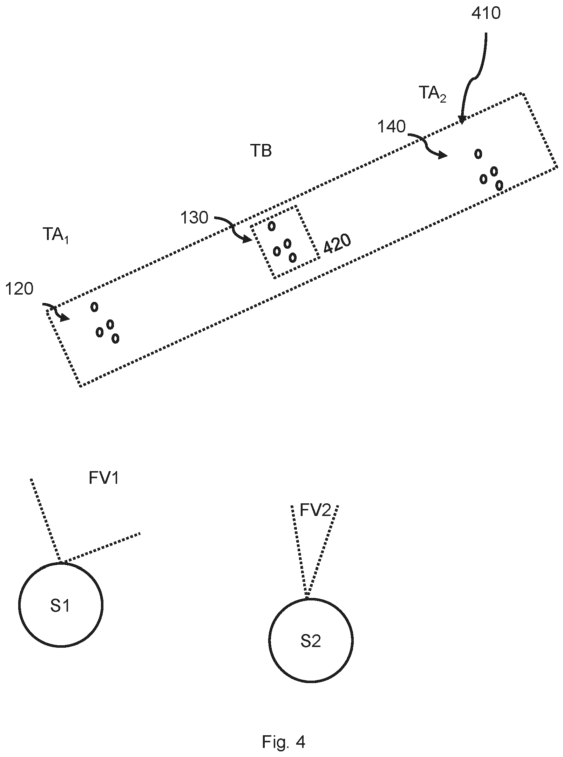

**Fig. 4** illustrates a further example of determining a trace according to one or more embodiments of the present disclosure.

In this embodiment, the points of the first and second sensor data comprises two-dimensional positions The bounding shapes 410, 420 are two-dimensional polygons, wherein the trace is determined as a two-dimensional polygon 410 enclosing all two-dimensional positions of the first cluster 120 and the second cluster 140 on a two-dimensional plane.

The two-dimensional positions may be obtained by projecting respective three-dimensional positions or coordinates to the two-dimensional plane, such as earth's surface. In one example, this effectively projects the points in a birds-eye view, or "seen from above".

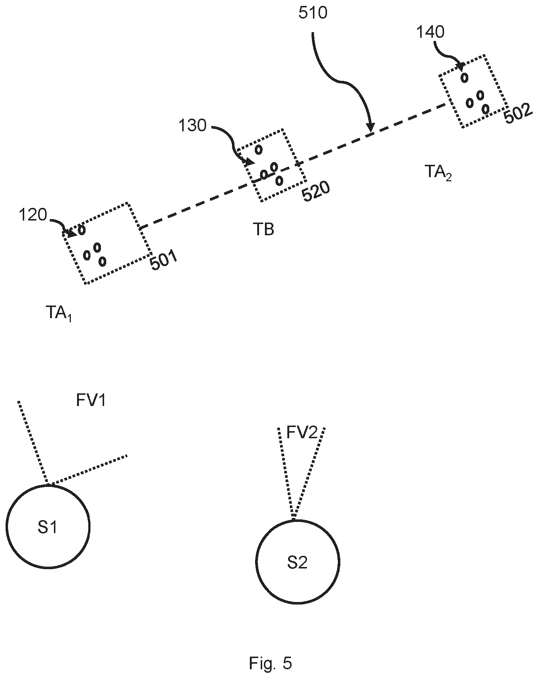

**Fig. 5** illustrates a further example of determining a trace according to one or more embodiments of the present disclosure.

In this embodiment, the points of the first and second sensor data comprises two-dimensional positions, wherein the bounding shape of the trace is determined as a line 510 between a bounding shape 501 of the first cluster 120 and a bounding shape 502 of the second cluster 140 on a two-dimensional plane. The line may e.g., originate from the outline of the respective bounding shape 501, 502, from the geometric center of the respective bounding shape 501, 502, or from a center of mass of the respective bounding shape 501, 502.

Additionally, or alternatively the distance measure is calculated as the sum of Euclidean distances along a respective normal of the line 510 to each respective point of the third cluster 130. Alternatively, the distance measure is calculated as Mahalanobis distance, or any other distance known to those skilled in the art.

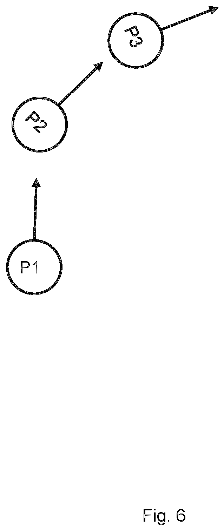

**Fig. 6** illustrates tracking of an object according to one or more embodiments of the present disclosure.

Tracking the object may optionally comprise generating movement information. The movement information indicates at least one pose P1, P2, P3 of the tracked object at a time within the time interval 200. In other words, a timestamped pose.

In one example the captured and tracked object has been registered by the first sensor S1 at time TA₁ and having a pose P1 defined by a first three-dimensional, 3D, coordinate X1, Y1, Z1 and a velocity V1. The tracked object has further been registered by the second sensor S2 at time TB and having a pose P2 defined by a second 3D coordinate X2, Y2, Z2 and a velocity V2. The captured dynamic object has further been registered by the first sensor S1 at time TA₂ and having a pose P3 defined by a third 3D coordinate X3, Y3, Z3 and a velocity V3.

The movement information may optionally comprise additional information, such that the movement information is further indicative of a selection of any of:
heading of the tracked object, velocity of the tracked object, acceleration of the tracked object, altitude of the tracked object, shape of the object, orientation of a bounding shape of the dynamic object.

**Fig.** 7 illustrates a flowchart of a method 700 according to one or more embodiments of the present disclosure. The method is performed by a control arrangement 800 configured to track an object in a scene 110 observed by perception sensors or a plutrality of perception sensors comprised in a vehicle. The method comprises:
**Step 710:** obtaining first sensor data from a first perception sensor S1.The first sensor data is indicative of the tracked object. Additionally, or alternatively, the first sensor data comprises a first cluster 120 of sensor data being detected at a first point in time T_{A1} and comprises a second cluster 140 of sensor data being detected at a subsequent second point in time T_{A2}.

In one example, the sensor data is obtained as a point cloud from which a cluster of points associated to the tracked object is generated.

**Step 720:** obtaining second sensor data from a second perception sensor S2 indicative of a candidate object. Additionally, or alternatively, the second sensor data comprises a third cluster 130 of sensor data being detected at a third point in time T_{B}. In one embodiment, the third point in time T_{B} is selected between the first point in time T_{A1} and second point in time T_{A2}.

In other words, the object is tracked using sensor data from at least two sensors.

**Step 730:** determining a trace using the first cluster 120 and the second cluster 140 of the first sensor data.

**Step 740:** calculating a distance measure between the third cluster 130 of the third sensor data and the determined trace.

**Step 750:** determining that the third cluster 130 of sensor data is indicative of the tracked object if the calculated distance measure is below a distance threshold.

**Step 760:** tracking the object using the first cluster 120, the second cluster 140 and the third cluster 130 if it is determined that the third cluster 130 of sensor data is indicative of the tracked object, or tracking the using the first cluster 120 and the second cluster 140 only if it is determined that the third cluster 130 of sensor data is not indicative of the tracked object.

In other words, tracking the object using sensor data from two or more sensors if 130 all sensors are indicative of the tracked object.

In one embodiment, the first and second sensor data comprises points or cluster points with associated positions, wherein determining the trace comprises determining a bounding shape 310 of points of the first cluster 120 and points of the second cluster 140. Additionally , or alternatively, the bounding shape encloses all points of the first sensor data.

In one embodiment, the distance measure is calculated as a fraction between points of the third cluster 130 enclosed by the bounding shape of the trace 310 and points of the third cluster 130 not enclosed by the bounding shape 310 of the trace.

In one embodiment, the distance measure is calculated as a fraction of a bounding shape 330 of the third cluster 130 that is enclosed by the bounding shape (310) of the trace.

In one embodiment, the method further comprises calculating a statistical distribution of points of the first cluster 120 and the second cluster 140, wherein the distance measure is calculated as a sum of Mahalanobis distances calculated from all respective positions of points of the third cluster 130 to the statistical distribution.

In one example, shown in Fig. 9, realistic LiDAR data shows clusters of detections of the rear end of a vehicle in motion. Using known methods to associate the clusters from the same sensor, 120 and 140, this method solves the problem of understanding that the cluster from another sensor, 130, is in fact the same object.

In one embodiment, the points of the first and the second sensor data comprises three-dimensional positions, wherein the bounding shapes 310, 320 are three-dimensional volumes, wherein the trace is determined as a three-dimensional volume.

In one embodiment, the points of the first and second sensor data comprises two-dimensional positions, wherein the bounding shapes 410, 420 are two-dimensional polygons. Additionally, or alternatively, the trace is determined as a two-dimensional polygon enclosing all points of points of the first cluster 120 and enclosing all points of the second cluster 140 on a two-dimensional plane.

In one example, the points are captured as points in a point cloud with associated three-dimensional, 3D, positions. The captured points are then projected onto a two-dimensional, 2D, plane. The two-dimensional polygon of the trace then encloses all projected points on the two-dimensional plane.

In one embodiment, the points of the first and second sensor data comprises two-dimensional positions, wherein the bounding shape of the trace is determined as a line 510 between a bounding shape 501 of the first cluster 120 and a bounding shape 502 of the second cluster 140 on a two-dimensional plane.

In one embodiment, the distance measure is calculated as the sum of Euclidean distances along a respective normal of the line 510 to each respective point of the third cluster 130. In other words, a distance along a respective line perpendicular to the line 510 that intersects each point in the third cluster 130.

In one embodiment, tracking the object comprises determining plurality of subsequent poses P1, P2, P3 of the object. Poses are further described in relation to Fig. 6. Each pose of the plurality of subsequent poses P1, P2, P3 comprises a selection of information selected from:
heading of the tracked object, shape of the tracked object, velocity of the tracked object acceleration of the tracked object, altitude of the tracked object, orientation of a respective bounding shape.

The poses may be used to describe tracks of the object/s to other modules.

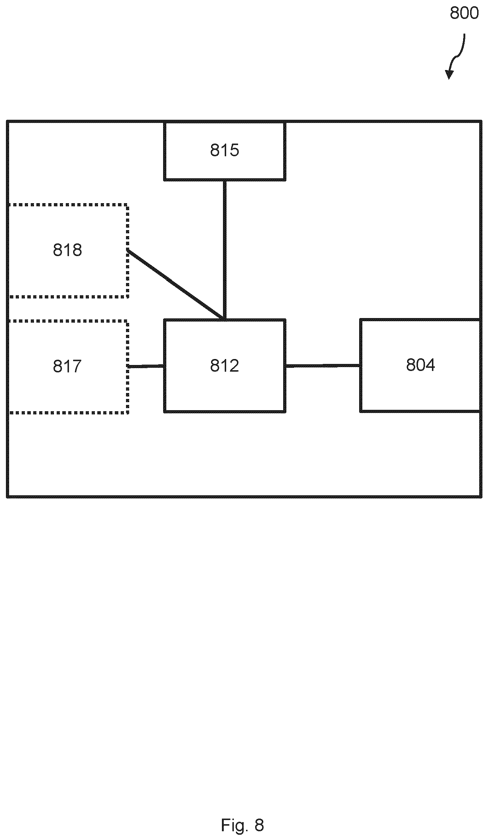

**Fig. 8** shows a control arrangement 800 according to one or more embodiments of the present disclosure. The control arrangement 800 may e.g., be in the form of an Electronic Control arrangement, a server, an on-board computer, a vehicle mounted computer system or a navigation device. The control arrangement 800 may comprise a processor or processing means 812 communicatively coupled to a transceiver 804 configured for wired or wireless communication. Further, the control arrangement 800 may further comprise at least one optional antenna (not shown in figure). The antenna may be coupled to the transceiver 804 and is configured to transmit and/or emit and/or receive wireless signals in a wireless communication system, e.g., wireless signals comprising road traffic event data. In one example, the processor 812 may be any of a selection of processing circuitry and/or a central processing unit and/or processor modules and/or multiple processors configured to cooperate with each-other. Further, the control arrangement 800 may further comprise a memory 815. The memory 815 may contain instructions executable by the processor to perform any of the methods described herein. The memory and/or computer-readable storage medium referred to herein may comprise of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

In one example, the control arrangement 800 obtains first sensor data from a first perception sensor S1. E.g., via the transceiver 804 from a wirelessly connected perception sensor. The first sensor data is indicative of the tracked object, and comprises a first cluster 120 of sensor data being detected at a first point in time TA1 and comprising a second cluster 140 of sensor data being detected at a subsequent second point in time TA2.

The control arrangement 800 further obtains second sensor data from a second perception sensor S2. The sensor data is indicative of a candidate object and comprises a third cluster 130 of sensor data being detected at a third point in time TB, the third point in time TB being between the first point in time TA1 and second point in time TA2.

The control arrangement 800 further determines a trace using the first cluster 120 and the second cluster 140 of the first sensor data.

The control arrangement 800 further calculates a distance measure between the third cluster 130 of sensor data and the determined trace.

The control arrangement 800 further determines that the third cluster 130 of sensor data is indicative of the tracked object if the calculated distance measure is below a distance threshold, and tracks the object using the first cluster 120, the second cluster 140 and the third cluster 130 if it is determined that the third cluster 130 of sensor data is indicative of the tracked object. Alternatively, the control arrangement 800 tracks the object using the first cluster 120 and the second cluster 140 only if it is determined that the third cluster 130 of sensor data is not indicative of the tracked object.

In a further embodiment, the control arrangement 800 may further comprise and/or be coupled to one or more sensors configured to e.g., receive and/or obtain and/or measure physical properties pertaining to the control arrangement 800.

In one or more embodiments the control arrangement 800 may further comprise an input device 817, configured to receive input or indications from a user and send a user-input signal indicative of the user input or indications to the processor or processing means 812.

In one or more embodiments the control arrangement 800 may further comprise a display 818 configured to receive a display signal indicative of rendered objects, such as text or graphical user input objects, from the processor or processing means 812 and to display the received signal as objects, such as text or graphical user input objects.

In one embodiment the display 818 is integrated with the user input device 817 and is configured to receive a display signal indicative of rendered objects, such as text or graphical user input objects, from the processing means 812 and to display the received signal as objects, such as text or graphical user input objects, and/or configured to receive input or indications from a user and send a user-input signal indicative of the user input or indications to the processing means 812.

In embodiments, the processing means 812 is communicatively coupled to a selection of any of the memory 815 and/or the communications interface and/or transceiver and/or the input device 817 and/or the display 818 and/or the one or more sensors. In embodiments, the transceiver 804 communicates using wired and/or wireless communication techniques. The wired or wireless communication techniques may comprise any of a CAN bus, Data Distribution Service (DDS), Bluetooth, Wi-Fi, GSM, UMTS, LTE or LTE advanced communications network or any other wired or wireless communications network known in the art.

In embodiments, the communications network communicate using wired or wireless communication techniques that may include at least one of a Local Area Network (LAN), Metropolitan Area Network (MAN), Global System for Mobile Network (GSM), Enhanced Data GSM Environment (EDGE), Universal Mobile Telecommunications System, Long term evolution, High Speed Downlink Packet Access (HSDPA), Wideband Code Division Multiple Access (W-CDMA), Code Division Multiple Access (CDMA), Time Division Multiple Access (TDMA), Bluetooth^{®}, Zigbee^{®}, Wi-Fi, Voice over Internet Protocol (VoIP), LTE Advanced, IEEE802.16m, Wireless MAN-Advanced, Evolved High-Speed Packet Access (HSPA+), 3GPP Long Term Evolution (LTE), Mobile WiMAX (IEEE 802.16e), Ultra Mobile Broadband (UMB) (formerly Evolution-Data Optimized (EV-DO) Rev. C), Fast Low-latency Access with Seamless Handoff Orthogonal Frequency Division Multiplexing (Flash-OFDM), High Capacity Spatial Division Multiple Access (iBurst^{®}) and Mobile Broadband Wireless Access (MBWA) (IEEE 802.20) systems, High Performance Radio Metropolitan Area Network (HIPERMAN), Beam-Division Multiple Access (BDMA), World Interoperability for Microwave Access (WiMAX) and ultrasonic communication, etc., but is not limited thereto.

Moreover, it is realized by the skilled person that the control arrangement 800 may comprise the necessary communication capabilities in the form of e.g., functions, means, units, elements, etc., for performing the present solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, encoder, decoder, power supply units, power feeders, communication interfaces, communication protocols, etc. which are suitably arranged together for performing the present solution.

Especially, the processor and/or processing means of the present disclosure may comprise one or more instances of processing circuitry, processor modules and multiple processors configured to cooperate with each-other, Central Processing Unit (CPU), a processing unit, a processing circuit, a processor, an Application Specific Integrated Circuit (ASIC), a microprocessor, a Field-Programmable Gate Array (FPGA) or other processing logic that may interpret and execute instructions. The expression "processor" and/or "processing means" may thus represent a processing circuitry comprising a plurality of processing circuits, such as, e.g., any, some or all the ones mentioned above. The processing means may further perform data processing functions for inputting, outputting, and processing of data comprising data buffering and device control functions, such as call processing control, user interface control, or the like.

In one embodiment, a control arrangement 800 is provided and is configured to configured to track an object in a scene 110 observed by a plurality of perception sensors comprised in a vehicle. The control arrangement is operable to:
Obtain first sensor data from a first perception sensor S1, the first sensor data being indicative of the tracked object, the first sensor data comprising a first cluster 120 of sensor data being detected at a first point in time T_{A1} and comprising a second cluster 140 of sensor data being detected at a subsequent second point in time TA₂,

Obtain second sensor data from a second perception sensor S2 indicative of a candidate object, the second sensor data comprising a third cluster 130 of sensor data being detected at a third point in time T_{B}, the third point in time T_{B} being between the first point in time T_{A1} and second point in time T_{A2}.

Determine a trace using the first cluster 120 and the second cluster 140 of the first sensor data.

Calculate a distance measure between the third cluster 130 of sensor data and the determined trace.

Determine that the third cluster 130 of sensor data is indicative of the tracked object if the calculated distance measure is below a distance threshold, and

Tracking the object using the first cluster 120, the second cluster 140 and the third cluster 130 if it is determined that the third cluster 130 of sensor data is indicative of the tracked object, or
tracking the object using the first cluster 120 and the second cluster 140 only if it is determined that the third cluster 130 of sensor data is not indicative of the tracked object.

In one embodiment, the first sensor data comprises points with associated positions, wherein the control arrangement is further operable to determining the trace by determining a bounding shape 310 of points of the first cluster 120 and points of the second cluster 140, the bounding shape enclosing all points of the first sensor data.

In one embodiment, the control arrangement is further operable to calculate the distance measure as a fraction (not shown) between points of the third cluster 130 enclosed by the bounding shape of the trace 310 and points of the third cluster 130 not enclosed by the bounding shape 310 of the trace.

In one embodiment, the control arrangement is further operable to calculate the distance measure as a fraction of a bounding shape 330 of the third cluster 130 that is enclosed by the bounding shape 310 of the trace.

In one embodiment, the control arrangement is operable to further calculating a statistical distribution of points of the first cluster 120 and the second cluster 140, wherein the distance measure is calculated as a sum of Mahalanobis distances calculated from all respective positions of points of the third cluster 130 to the statistical distribution.

In one embodiment, the points of the first and the second sensor data comprises three-dimensional positions, wherein the bounding shapes 310, 320 are three-dimensional volumes, wherein the trace is determined as a three-dimensional volume.

In one embodiment, the points of the first and second sensor data comprises two-dimensional positions, wherein the bounding shapes 410, 420 are two-dimensional polygons, wherein the trace is determined as a two-dimensional polygon enclosing all two-dimensional positions of the first cluster 120 and the second cluster 140 on a two-dimensional plane.

In one embodiment, the points of the first and second sensor data comprises two-dimensional positions, wherein the control arrangement is operable to determine the bounding shape of the trace as a line 510 between a bounding shape 501 of the first cluster 120 and a bounding shape 502 of the second cluster 140 on a two-dimensional plane.

In one embodiment, the distance measure is calculated as the sum of Euclidean distances along a respective normal of the line 510 to each respective point of the third cluster 130.

In one embodiment, the control arrangement is operable to track the object by determining plurality of subsequent poses P1, P2, P3 of the object. In one embodiment, each pose of the plurality of subsequent poses P1, P2, P3 comprises a selection of information selected from heading of the tracked object, velocity of the tracked object acceleration of the tracked object, altitude of the tracked object, orientation of a respective bounding shape.

According to one aspect of the present disclosure, a vehicle is provided and comprises:
the control arrangement 800 described herein, and
a plurality of perception sensors communicatively coupled to the control arrangement 800.

**Fig. 9** illustrates clusters of points according to one or more embodiments of the present disclosure.

In the present disclosure, the proposed method firstly generates clusters for the points associated with an object. E.g., filters out points of a point cloud that is associated with a tracked object. Generating clusters is performed independently for each perception sensor, e.g., a range measuring sensor, and for each time frame. Generating clusters can be done with any known, state-of-the-art solution. Figure 9 illustrates three point clusters 120, 130, 140 associated with a dynamic object. The leftmost 120 and rightmost 140 clusters correspond to points from a first perception sensor S1 at two different time instances TA₁ and TA₂, and middle cluster 130 corresponds to points from a second perception sensor S2 at a single time instance TB. In this example, leftmost 120 and rightmost 140 clusters, e.g. from a Lidar A, correspond to two timestamps TA₁ and TA₂, while the middle cluster 130, e.g., from a Lidar B, corresponds to a timestamp TB such that TA₁ < TB < TA₂. TA₁ and TA₂ may correspond to two consecutive lidar sweeps of a first perception sensor S1. The perception sensors operate at a high enough frequency, for instance corresponding to a time difference of about 100 ms between consecutive scans. For a vehicle moving at 72 km/h, i.e., 20 m/s, the displacement between the two white clusters could be about 2 m, which is the distance travelled by the moving vehicle during 100 ms.

In a subsequent step, the middle cluster 130 is associated with the leftmost 120 and rightmost 140 clusters using a novel approach. The intuition behind the present disclosure is that in the time between scans, the vehicle has moved such a small distance that it is nearly physically impossible for another object to exist in between the two consecutive clusters 120, 140. Therefore, if the middle cluster 130 is located inside the space occupied between the two leftmost 120 and rightmost 140 clusters, then the probability is high that it belongs to the same moving object. The space could either be the 2-dimensional area, or the 3-dimensional volume that the object has covered between the two time instances.

In different embodiments of the present disclosure, different approaches are used for computing the distance measure/distance metric (e.g. probability) for how likely is for the middle cluster 130 to "belong to" the same moving object as the leftmost 120 and rightmost 140 clusters, based on the timestamps and the relative position between the clusters.

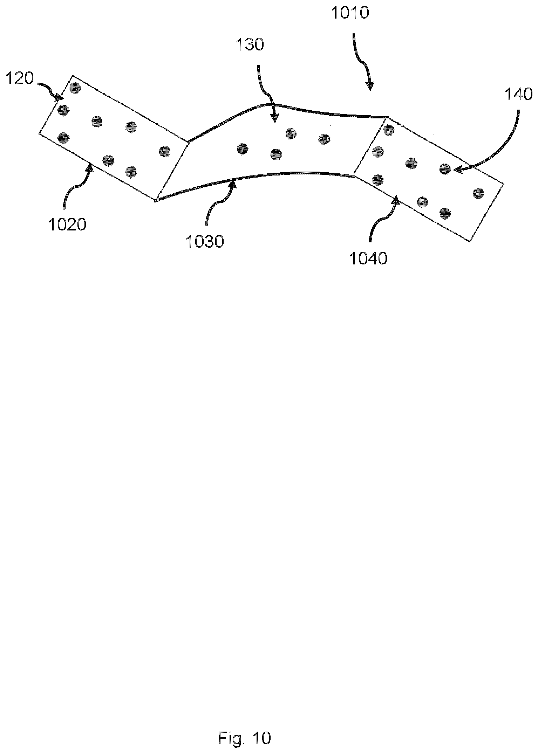

**Fig. 10** illustrates a trace according to one or more embodiments of the present disclosure.

As described previously, two clusters of points are obtained from a first sensor. A trace having a bounding shape in the form of a two-dimensional polygon 1010 is determined.

In one example, a first bounding shape 1020 is generated for the first cluster 120 and a second bounding shape 1040 is generated for the second cluster 140. The trace is then formed by joining the first and second bounding shapes, effectively generating a third bounding shape 1030.

The trace 1010, can for example be viewed in a "birds-eye-view perspective" and then expressed as a 2D bounding box, a 2D polygon, or any other known method to represent an object's trajectory in 2D. Likewise, it can be expressed in 3D with 3D bounding box or a 3D polygon.

An important aspect of the present disclosure lies in the use of a "traversed area or volume" of the clusters 120,140 as means of association with the third cluster 130. In other words, a trace may be seen as an estimated movement pattern of the tracked object, and is derived using the first and second clusters 120, 140 of the first sensor.

Finally, it should be understood that the invention is not limited to the embodiments described above, but also relates to and incorporates all embodiments within the scope of the appended independent claims.

## Claims

1. A method performed by a control arrangement (700) configured to track an object in a scene (110) observed by a plurality of perception sensors comprised in a vehicle, the method comprising:
obtaining first sensor data from a first perception sensor (S1), the first sensor data being indicative of the tracked object, the first sensor data comprising a first cluster (120) of sensor data being detected at a first point in time (T_{A1}) and comprising a second cluster (130) of sensor data being detected at a subsequent second point in time (T_{A2}),
obtaining second sensor data from a second perception sensor (S2) indicative of a candidate object, the second sensor data comprising a third cluster (140) of sensor data being detected at a third point in time (T_{B}), the third point in time (T_{B}) being between the first point in time (T_{A1}) and second point in time (T_{A2}),
determining a trace using the first cluster (120) and the second cluster (130) of the first sensor data,
calculating a distance measure between the third cluster (140) of sensor data and the determined trace
determining that the third cluster (140) of sensor data is indicative of the tracked object if the calculated distance measure is below a distance threshold, and
tracking the object using the first cluster (120), the second cluster (140) and the third cluster (130) if it is determined that the third cluster (130) of sensor data is indicative of the tracked object, or
tracking the object using the first cluster (120) and the second cluster (140) only if it is determined that the third cluster (130) of sensor data is not indicative of the tracked object.

2. The method according to claim 1, wherein the first sensor data comprises points with associated positions, wherein determining the trace comprises determining a bounding shape (310) of points of the first cluster (120) and points of the second cluster (130), the bounding shape enclosing all points of the first sensor data.

3. The method according to claim 2, wherein the distance measure is calculated as a fraction between points of the third cluster (130) enclosed by the bounding shape of the trace (310) and points of the third cluster (130) not enclosed by the bounding shape (310) of the trace.

4. The method according to claim 2, wherein the distance measure is calculated as a fraction of a bounding shape (330) of the third cluster (130) that is enclosed by the bounding shape (310) of the trace.

5. The method according to claim 2, further comprising calculating a statistical distribution of points of the first cluster (120) and the second cluster (140), wherein the distance measure is calculated as a sum of Mahalanobis distances calculated from all respective positions of points of the third cluster (130) to the statistical distribution.

6. The method according to any of claims 2-5, wherein the points of the first and the second sensor data comprises three-dimensional positions, wherein the bounding shapes (310, 320) are three-dimensional volumes, wherein the trace is determined as a three-dimensional volume.

7. The method according to any of claims 2-5, wherein the points of the first and second sensor data comprises two-dimensional positions, wherein the bounding shapes (410, 420) are two-dimensional polygons, wherein the trace is determined as a two-dimensional polygon enclosing all points of the first cluster (120) and points of the second cluster (140) on a two-dimensional plane.

8. The method according to any of claims 2-5, wherein the points of the first and second sensor data comprises two-dimensional positions, wherein the bounding shape of the trace is determined as a line (510) between a bounding shape (501) of the first cluster (120) and a bounding shape (502) of the second cluster (130) on a two-dimensional plane.

9. The method according to claim 8, wherein the distance measure is calculated as the sum of Euclidean distances along a respective normal of the line (510) to each respective point of the third cluster (130).

10. The method according to any of the preceding claims, wherein tracking the object comprises determining plurality of subsequent poses (P1, P2, P3) of the object.

11. The method according to claim 10, wherein each pose of the plurality of subsequent poses (P1, P2, P3) comprises a selection of information selected from:
heading of the tracked object, velocity of the tracked object acceleration of the tracked object, altitude of the tracked object, orientation of a respective bounding shape.

12. A control arrangement (800) configured to configured to track an object in a scene (110) observed by a plurality of perception sensors comprised in a vehicle, the control arrangement being operable to:
obtaining first sensor data from a first perception sensor (S1), the first sensor data being indicative of the tracked object, the first sensor data comprising a first cluster (120) of sensor data being detected at a first point in time (T_{A1}) and comprising a second cluster (140) of sensor data being detected at a subsequent second point in time (T_{A2}),
obtaining second sensor data from a second perception sensor (S2) indicative of a candidate object, the second sensor data comprising a third cluster (130) of sensor data being detected at a third point in time (T_{B}), the third point in time (T_{B}) being between the first point in time (T_{A1}) and second point in time (T_{A2}),
determining a trace using the first cluster (120) and the second cluster (140) of the first sensor data,
calculating a distance measure between the third cluster (130) of sensor data and the determined trace
determining that the third cluster (130) of sensor data is indicative of the tracked object if the calculated distance measure is below a distance threshold, and
tracking the object using the first cluster (120), the second cluster (140) and the third cluster (130) if it is determined that the third cluster (130) of sensor data is indicative of the tracked object, or
tracking the object using the first cluster (120) and the second cluster (140) only if it is determined that the third cluster (130) of sensor data is not indicative of the tracked object.

13. The control arrangement according to claim 12, wherein the first sensor data comprises points with associated positions, wherein the control arrangement is further operable to determining the trace by determining a bounding shape (310) of points of the first cluster (120) and points of the second cluster (140), the bounding shape enclosing all points of the first sensor data.

14. The control arrangement according to claim 13, wherein the control arrangement is further operable to calculate the distance measure as a fraction between points of the third cluster (130) enclosed by the bounding shape of the trace (310) and points of the third cluster (130) not enclosed by the bounding shape (310) of the trace.

15. The control arrangement according to claim 13, wherein the control arrangement is further operable to calculate the distance measure as a fraction of a bounding shape (330) of the third cluster (130) that is enclosed by the bounding shape (310) of the trace.

16. The control arrangement according to claim 13, wherein the control arrangement is operable to further calculating a statistical distribution of points of the first cluster (120) and the second cluster (140), wherein the distance measure is calculated as a sum of Mahalanobis distances calculated from all respective positions of points of the third cluster (130) to the statistical distribution.

17. The control arrangement according to any of claims 13-16, wherein the points of the first and the second sensor data comprises three-dimensional positions, wherein the bounding shapes (310, 320) are three-dimensional volumes, wherein the trace is determined as a three-dimensional volume.

18. The control arrangement according to any of claims 13-16, wherein the points of the first and second sensor data comprises two-dimensional positions, wherein the bounding shapes (410, 420) are two-dimensional polygons, wherein the trace is determined as a two-dimensional polygon enclosing all two-dimensional positions of the first cluster (120) and the second cluster (140) on a two-dimensional plane.

19. The control arrangement according to any of claims 13-16, wherein the points of the first and second sensor data comprises two-dimensional positions, wherein the control arrangement is operable to determine the bounding shape of the trace as a line (510) between a bounding shape (501) of the first cluster (120) and a bounding shape (502) of the second cluster (140) on a two-dimensional plane.

20. The control arrangement according to claim 19, wherein the distance measure is calculated as the sum of Euclidean distances along a respective normal of the line (510) to each respective point of the third cluster (130).

21. The control arrangement according to any of the preceding claims, wherein the control arrangement is operable to track the object by determining plurality of subsequent poses (P1, P2, P3) of the object.

22. The control arrangement according to claim 10, wherein each pose of the plurality of subsequent poses (P1, P2, P3) comprises a selection of information selected from:
heading of the tracked object, velocity of the tracked object acceleration of the tracked object, altitude of the tracked object, orientation of a respective bounding shape.

23. A vehicle comprising:
the control arrangement (800) according to claim 12, and
a plurality of perception sensors communicatively coupled to the control arrangement (800).
